Europäisches Patentamt

European Patent Office

Office européen des brevets

(11) Veröffentlichungsnummer: **0 515 949 A2**

## EUROPÄISCHE PATENTANMELDUNG

(21) Anmeldenummer: **92108398.6**

(22) Anmeldetag: **19.05.92**

(51) Int. Cl.5: **C08G 65/30**, C08J 3/00

(30) Priorität: **30.05.91 DE 4117749**

(43) Veröffentlichungstag der Anmeldung:
**02.12.92 Patentblatt 92/49**

(84) Benannte Vertragsstaaten:
**AT BE CH DE DK ES FR GB GR IT LI LU NL SE**

(71) Anmelder: **BAYER AG**

**W-5090 Leverkusen 1 Bayerwerk(DE)**

(72) Erfinder: **Endesfelder, Andreas, Dr.**
**Breslauer Strasse 56**
**W-5063 Overath(DE)**
Erfinder: **Günther, Jürgen, Dr.**
**Sandstrasse 9**
**W-4000 Düsseldorf 12(DE)**
Erfinder: **Ullrich, Martin, Dipl.-Ing.**
**Mendelssohn-Strasse 32**
**W-5090 Leverkusen(DE)**
Erfinder: **Alberts, Heinrich, Dr.**
**Schulstrasse 1a**
**W-5068 Odenthal(DE)**
Erfinder: **Schulze, Volker, Dr.**
**Staufenberg-Strasse 12**
**W-5060 Bergisch Gladbach(DE)**
Erfinder: **Sylvester, Gerd, Dr.**
**An der Steinrütsch 5a**
**W-5090 Leverkusen(DE)**

(54) Verfahren zur Herstellung von Polyethylenoxid mittleren Molekulargewichts.

(57) Die vorliegende Erfindung betrifft ein Verfahren zur Herstellung von Polyethylenoxid mittleren Molekulargewichts durch Abbau von hochmolekularem Polyethylenoxid durch Scherung.

EP 0 515 949 A2

Die vorliegende Erfindung betrifft ein Verfahren zur Herstellung von Polyethylenoxid mittleren Molekulargewichts durch Abbau von hochmolekularem Polyethylenoxid durch Scherung.

Polyethylenoxide mit verschiedenen Molekulargewichtseinstellungen von $10^2$ bis $10^7$ sind bereits bekannt und kommerziell erhältlich. Es ist ebenfalls bereits bekannt, daß Polyethylenoxide mit mittleren Molekulargewichten von 100 000 bis 650 000 durch Abbau von hochmolekularen Polyethylenoxiden durch Behandlung mit Gamma-Strahlung hergestellt werden können. Die Energie der Strahlung beträgt zwischen 50 keV und 20 MeV und wird über $Co^{60}$- oder $Cs^{137}$-Strahlungsquellen, Röntgenstrahlung, Van de Graaff-Beschleunigern oder linearen Elektronenbeschleunigern erzeugt. Bestrahlungen mit einer hohen Strahlungsdosis führen häufig, insbesondere unter Sauerstoffausschluß, zu wasserunlöslichen, vernetzten Produkten (US-PS 3,470,078).

Bestrahlungen mit niedrigen Dosisraten in Gegenwart von Radikalfängern wie Sauerstoff führen zu wasserlöslichen Polyethylenoxiden mit geringen Gelanteilen (P. Neudörfl, Kolloid-Zeitschrift und Zeitschrift für Polymer 224, 25 (1968)). Nachteile dieser Verfahren sind, daß Bestrahlungen mit solch energiereichen Strahlen gefährlich sind und nur unter großen Sicherheitsvorkehrungen durchgeführt werden können. Oft können die Strahlungsdosen und Sauerstoffkonzentrationen von Charge zu Charge nicht exakt gleichgehalten werden, so daß Produkte mit nicht einheitlichen Molekulargewichten erhalten werden und die Produktqualität hierdurch erheblich beeinträchtigt wird. Ein besonderer Nachteil dieser Verfahren ist, daß über Strahlung abgebaute Polyethylenoxide für Pharmaanwendungen, z.B. als Hilfsstoffe für Tabletten, nicht uneingeschränkt eingesetzt werden können und in vielen Ländern von den Behörden hierfür nicht zugelassen sind.

Es ist ebenfalls bekannt, daß Polyethylenoxide in wäßriger Lösung durch Anwendung von hohen Scherkräften abgebaut werden können (P.A. King: Radiation Modification of Poly(ethyleneoxide) in: Irradiation of Polymers - Symposium at 151$^{st}$ Meeting; American Chemical Society 1967). Zum Abbau des Polyethylenoxids sind in diesem Verfahren hohe mechanische Energien sowie aufwendige und kostenintensive Prozeßschritte zur Einengung der wäßrigen Lösung notwendig.

Aus Encyclopedia of Polymer Science and Engineering, Vol. 9, (1987), S. 467-485, ist auch der thermooxidative Abbau der verschiedensten Polymertypen mittels Scherbeanspruchung bekannt.

Es ist weiterhin bekannt, daß Polyethylenoxide hohen Molekulargewichtes mit Peroxiden in Gegenwart von Sauerstoff abgebaut werden können (US-PS 4,200,704). Das Polyethylenoxid wird als Suspension in nicht wäßrigen, organischen Flüssigkeiten, die das Polyethylenoxid bei Temperaturen von über 65°C anquellen, mit Peroxiden und 25 bis 250 ppm Sauerstoff unter Inertgas umgesetzt. Bei diesem Verfahren führt die Suspendierung des Polyethylenoxids in Lösungsmitteln oft zur Agglomeration der Polyethylenoxidteilchen, so daß zur Vermeidung dieses Nachteils der Zusatz von Kieselgel sowie aufwendige Aufarbeitungsverfahren erforderlich sind. Die gleichzeitige Anwendung von organischen Lösungsmitteln und Sauerstoff erfordert darüber hinaus umfangreiche Sicherheits- und Kontrollmaßnahmen und behindert eine großtechnische Herstellung erheblich.

Auch für verschiedene Kautschukarten ist ein Polymerabbau über Scherbeanspruchung bekannt (vgl. US-PS 4,786,690).

Ein Verfahren, das die oben beschriebenen Nachteile vermeidet und die einfache, sichere und kontinuierliche Herstellung von Polyethylenoxiden mit mittleren Molekulargewichten ohne Verwendung von Lösungsmitteln, Peroxiden und Gamma-Strahlung ermöglicht, ist deshalb äußerst wünschenswert.

Es wurde gefunden, daß Polyethylenoxid mittleren Molekulargewichtes hergestellt werden kann, indem man Polyethylenoxid hohen Molekulargewichtes durch Scherung in Masse, d.h. ohne Anwesenheit von Lösungsmitteln, abbaut.

Die vorliegende Erfindung betrifft ein Verfahren zur Herstellung von gelfreien Polyethylenoxiden mit einem Molekulargewicht von 10 000 bis 1 500 000, dadurch gekennzeichnet, daß man Polyethylenoxide mit einem Molekulargewicht von 2 500 000 bis 10 000 000 bei einer Massetemperatur von 80 bis 250°C durch Scherung in Masse, d.h. bei Abwesenheit von Lösungsmitteln, in geeigneten Aggregaten, die Schergefälle von 250 bis 2500 sec$^{-1}$ erzeugen, abbaut.

Falls nicht ausdrücklich anders angegeben, steht der Begriff "gelfreie Polyethylenoxide" für solche Polyethylenoxide, die in 0,9 %iger wäßriger Natriumchloridlösung bei Raumtemperatur klar löslich sind.

Durch das erfindungsgemäße Verfahren werden bevorzugt solche gelfreien Polyethylenoxide erhalten, die eine monomodale Molekulargewichtsverteilung besitzen.

Von besonderem Interesse ist die Herstellung von Polyethylenoxiden mit einem Molekulargewicht von 20 000 bis 800 000, insbesondere von 30 000 bis 650 000.

Die vorliegende Erfindung bezieht sich ebenfalls auf die Herstellung von wasserlöslichen Copolymeren und Terpolymeren, die neben mindestens 75 Mol-% Ethylenoxy-Einheiten auch andere kohlenwasserstoffsubstituierte Ethylenoxy-Einheiten besitzen. Beispiele für bevorzugte Copolymere und Terpolymere sind unter anderem Copolymere aus Ethylenoxid und Propylenoxid, Copolymere aus Ethylenoxid und Styroloxid, Copolymere aus Ethylenoxid und 2,3-Butylenoxid, Terpolymere aus Ethylenoxid, Propylenoxid und 2,3-Butylenoxid, Terpolymere aus Ethylenoxid, 2,3-Butylenoxid und Styroloxid.

Als Ausgangsmaterialien eignen sich für das erfindungsgemäße Verfahren vorzugsweise Polyethylenoxide mit Molekulargewichten von 3 500 000 bis 8 000 000.

Die in der vorliegenden Erfindung angegebenen Molekulargewichte sind Gewichtsmittel und werden durch Gelpermeationschromatographie mit 0.9 %iger Natriumchlorid-Lösung (Kochsalzlösung) als Elutionsmittel bestimmt.

Der Abbau des Polyethylenoxids wird in dem erfindungsgemäßen Verfahren ohne Zusatz von Lösungsmitteln in Masse, vorzugsweise bei Massetemperaturen von 130° bis 230°C, durchgeführt.

Zur Ausführung des erfindungsgemäßen Verfahrens sind die in der chemischen Technik bekannten Hochleistungsrührer und Hochviskosaggregate wie Kneter und insbesondere Extruder geeignet. Bevorzugte Aggregate sind beheizbare Einwellen- und Mehrwellen-Extruder mit Längen-zu-Durchmesser-Verhältnissen von 20 bis 70, die zusätzliche Dosierungs-, Begasungs- und Ausdampföffnungen besitzen können. Besonders bevorzugt sind gleichsinnig rotierende Doppelwellen-Extruder mit einem Längen-zu-Durchmesser-Verhältnis von 20 bis 70, bevorzugt 30 bis 45, die Öffnungen zur Dosierung von Feststoffen und Flüssigkeiten, zur Einleitung von Gasen und zum Ausdampfen von flüchtigen Bestandteilen, wie z.B. zur Entgasung, besitzen können.

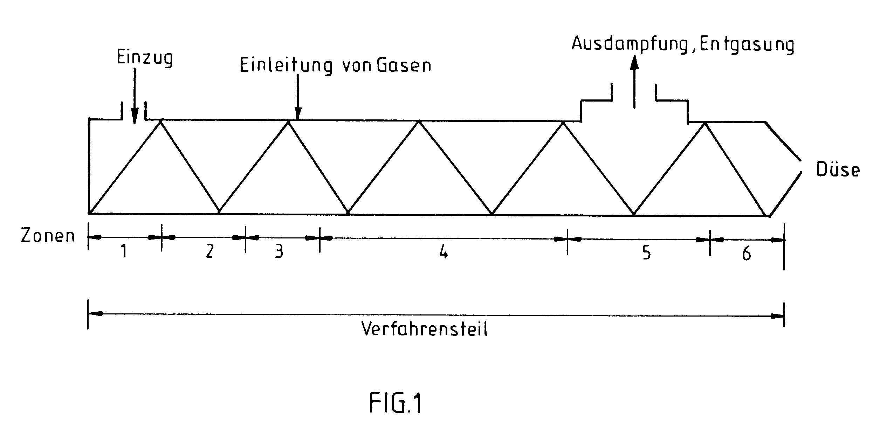

Zur Erläuterung des Verfahrens wird für den Fall der Anwendung eines Extruders der mit Produkt beschickte Reaktionsraum (das Verfahrensteil des Extruders) bevorzugt aus einer Einzugszone 1, einer Aufschmelzzone 2, einer Förderzone 3 mit einer Öffnung zur Einleitung von Gasen, einer Reaktionszone 4, einer Ausdampf- und Entgasungszone 5 und einer Austragszone 6 gebildet, wie aus Fig. 1 ersichtlich ist.

Für das erfindungsgemäße Verfahren sind Polyethylenoxid-Schergefalle von 400 bis 1 500 sec$^{-1}$ besonders geeignet. Im Falle der Anwendung eines Extruders beziehen sich die angegebenen Schergefälle auf das Geschwindigkeitsgefälle im radialen Spiel zwischen dem Kamm des Schneckenprofils und der Gehäusewand.

Bei Einsatz von Extrudern ist die Verwendung von Knetelementen mit links und rechts versetzten Knetscheiben zur intensiven Durchmischung sowie die Verwendung von in Bezug auf die Produktaustragsrichtung des Extruders entgegengesetzt fördernden Elementen (im folgenden als Linksgewinde bezeichnet) in der Förderzone 3 und der Reaktionszone 4 besonders geeignet.

Die Herstellung des Polyethylenoxids mittleren Molekulargewichts nach dem erfindungsgemäßen Verfahren kann mit oder ohne zusätzliche Einleitung von Sauerstoff oder Gasgemischen, die Sauerstoff enthalten, durchgeführt werden. Bei Verwendung von Gasgemischen werden Mischungen aus Stickstoff und Sauerstoff, die bis zu 20 Volumenprozent Sauerstoff enthalten, in einer Dosierung von 60 bis 1 200 Liter pro Stunde bevorzugt, wobei bevorzugt bis zu 600 Liter/kg Polymer, insbesondere bis zu 400 Liter/kg Polymer, eingesetzt werden.

Bei Anwendung von hohen Schergefällen, besonders bei Einsatz von Extrudern mit Linksgewinden, ist der Einsatz von Sauerstoff zur Vermeidung der Bildung von multimodalen Molekulargewichtsverteilungen und von vernetzten Anteilen (Gelen) erforderlich.

Das nach dem erfindungsgemäßen Verfahren hergestellte Polyethylenoxid mittleren Molekulargewichts besitzt vielfältige Einsatzmöglichkeiten. Beispiele hierfür sind Anwendungen als Verdickungsmittel und Stabilisator in Enteisungsmitteln, als Weichmacher und Verdickungsmittel in pharmazeutischen und kosmetischen Cremen, Lotionen und Shampoos, als Schmiermittel auf wäßriger Basis, z.B. in der Metallverarbeitung, als Bindemittel in nicht verwebten Textilien, als Weichmacher für Polymere, wie z.B. Polyvinylacetat, und als Hilfsstoff in Pharmazeutika, z.B. in Tabletten mit Langzeitwirkung, wo die nicht erfolgte Strahlenbelastung besonders vorteilhaft ist.

Bei einem Vergleich des erfindungsgemäß hergestellten Polyethylenoxids mit dem bekannten, durch Gamma-Strahlung hergestellten Polymer zeigt sich, daß beide Formen sich in ihrem Freisetzungsverhalten praktisch nicht unterscheiden, wie aus den folgenden Anwendungsbeispielen A und B ersichtlich ist.

Das erfindungsgemäße Verfahren wird anhand der Ausführungsbeispiele näher erläutert.

Anwendungsbeispiel A

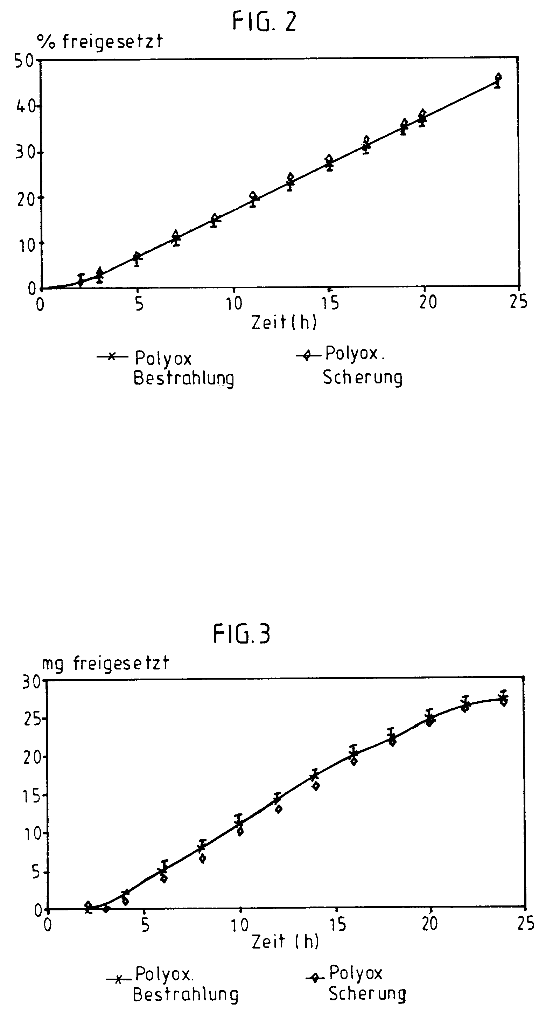

In Tabletten mit Langzeitwirkung wird ein durch Behandlung mit Gamma-Strahlung hergestelltes Polyethylenoxid mit einem Molekulargewicht von 100 000 durch das nach Beispiel 6 des erfindungsgemäßen Verfahrens produzierte Polyoxyethylen ersetzt. Die verlangsamte Wirkstoffabgabe, wie sie bei Tabletten mit Langzeitwirkung notwendig ist, wird durch den Einsatz von durch Scherung abgebautem Polyoxyethylen nicht verändert. Die hier eingesetzte Tablette mit Langzeitwirkung setzt sich wie im folgenden beschrieben zusammen (vgl. DE 3 417 113 A1): 50 % Natrium-diclofenac, 46 % Polyethylenoxid, 2 % Natriumchlorid und 2 % Magnesiumstearat. Diese Tablette ist von einer semipermeablen Wand, die 90 % Celluloseacetat mit 39,8 % Acetylgruppen und 10 % Polyethylenglykol 4000 enthält, umgeben. In dieser Wand befindet sich eine Öffnung mit 0,5 mm Durchmesser. Die im Freisetzungstest abgegebene Wirkstoffmenge als Funktion der Zeit ist in Fig. 2 für beide Tabletten dargestellt.

Anwendungsbeispiel B

Auch bei komplizierter aufgebauten Tabletten mit Langzeitwirkung, bestehend aus zwei osmotischen Schichten und einer semipermeablen Wand (vgl. DE 3 417 113 A1), wird durch Austausch von mit Strahlung abgebautem Polyoxyethylen des Molekulargewichts 200 000 mit nach Beispiel 1 des erfindungsgemäßen Verfahrens hergestelltem Polyoxyethylen keine Änderung der Wirkstoffabgabe festgestellt (Fig. 3). Die Tablette hatte folgende Zusammensetzung: die erste Schicht enthielt 30 mg Nifedipin, 106,5 mg Polyethylenoxid, 3 mg Kaliumchlorid, 7,5 mg Hydroxypropylmethylcellulose und 3 mg Magnesiumstearat. Die andere Schicht setzte sich zusammen aus 52 mg Polyethylenoxid des Molekulargewichts 5 000 000, 22 mg Natriumchlorid und 1,5 mg Magnesiumstearat. Die Wand, welche auf der Seite der ersten Schicht eine Öffnung von 0,5 mm hatte, enthielt 95 % Celluloseacetat mit einem Acetylgehalt von 39,8 % und 5 % Hydroxypropyl-methylcellulose.

Ausführungsbeispiele

Beispiel 1

Polyethylenoxid mit einem Molekulargewicht von 5 000 000 wird in einem gleichsinnig rotierenden Doppelwellenextruder mit einem Längen- zu Durchmesser-Verhältnis von 37,5 und einer Verfahrensteillänge von 1200 mm zu Polyethylenoxid mit einem Molekulargewicht von 214 000 abgebaut.

Hierzu werden 1,40 kg Polyethylenoxid pro Stunde durch den Doppelwellenextruder mit einer Rotationsgeschwindigkeit der Wellen von 130 U/Min bei einer Massetemperatur von 190°C gefördert. Zum Abbau des Polyethylenoxids werden in der Reaktionszone 4 Knetelemente mit links und rechts versetzten Knetscheiben sowie am Ende der Reaktionszone 4 ein Linksgewinde eingesetzt.

In der Ausdampfzone 5 werden flüchtige Bestandteile bei einem Druck von 10 bis 100 mbar entfernt.

Nach dem Austrag aus dem Extruder erhält man ein Polyethylenoxid mit einem mittleren Molekulargewicht von 214 000 und monomodaler Molekulargewichtsverteilung (Uneinheitlichkeit = 5,27), das in 0,9 %iger Kochsalzlösung ohne Gelanteil löslich ist.

Beispiel 2

Analog zu Beispiel 1 wird bei einem Durchsatz von 1,40 kg/h bei einer Massetemperatur von 210°C nach dem Austrag aus dem Extruder Polyethylenoxid mit einem Molekulargewicht von 207 000 und monomodaler Molekulargewichtsverteilung (Uneinheitlichkeit = 5,43) erhalten, das in 0,9 %iger Kochsalzlösung ohne Gelanteil löslich ist.

Beispiel 3

Analog zu Beispiel 1 werden 1,49 kg/h Polyethylenoxid mit einem Molekulargewicht von 5 000 000 durch einen gleichsinnig rotierenden Doppelwellenextruder mit einer Rotationsgeschwindigkeit der Wellen von 130 U/Min bei einer Massetemperatur von 170°C gefördert. Zum Abbau des Polyethylenoxids werden in der Reaktionszone 4 zwei Linksgewinde eingesetzt.

Nach dem Austrag aus der Schnecke erhält man ein Polyethylenoxid mit einem Molekulargewicht von 219 000 und monomodaler Molekulargewichtsverteilung (Uneinheitlichkeit = 6,51), das in 0,9 %iger Kochsalzlösung ohne Gelanteil löslich ist.

Beispiel 4

Polyethylenoxid mit einem Molekulargewicht von 5 000 000 wird mit einem Durchsatz von 2,80 kg/h bei einer Massetemperatur von 150°C durch einen Doppelwellenextruder wie in Beispiel 1 beschrieben mit einer Rotationsgeschwindigkeit der Wellen von 130 U/Min gefördert. Zum Abbau des Polyethylenoxids wird in der Förderzone 3 ein Gasgemisch, das 5 % Sauerstoff und 95 % Stickstoff enthält, mit einer Menge von 160 l/h eindosiert. Die Förderzone 3 und die Reaktionszone 4 besitzen Knetelemente mit links und rechts versetzten Knetscheiben.

In der Ausdampf- bzw. Entgasungszone 5 werden der nicht abreagierte Sauerstoff, der Stickstoff sowie flüchtige Bestandteile bei einem Druck von 270 mbar entfernt.

Nach dem Austrag aus dem Extruder erhält man ein Polyethylenoxid mit einem Molekulargewicht von 139 000 und monomodaler Molekulargewichtsverteilung (Uneinheitlichkeit = 4,68), das in 0,9 %iger Kochsalzlösung ohne Gelanteil löslich ist.

Beispiel 5

Analog zu Beispiel 4 werden 2,80 kg Polyethylenoxid (Molekulargewicht 5 000 000) pro Stunde bei einer Massetemperatur von 170°C durch einen gleichsinnig rotierenden Doppelwellenextruder gefördert.

Nach dem Austrag aus dem Extruder erhält man ein Polyethylenoxid mit einem Molekulargewicht von 164 000 und monomodaler Molekulargewichtsverteilung (Uneinheitlichkeit = 4,51), das in 0,9 %iger Kochsalzlösung ohne Gelanteil löslich ist.

Beispiel 6

Analog zu Beispiel 4 werden 3,00 kg Polyethylenoxid (Molekulargewicht 5 000 000) pro Stunde bei einer Massetemperatur von 185°C durch einen gleichsinnig rotierenden Doppelwellenextruder gefördert.

Nach dem Austrag aus dem Extruder erhält man ein Polyethylenoxid mit einem Molekulargewicht von 109 000 und monomodaler Molekulargewichtsverteilung (Uneinheitlichkeit = 4,38), das in 0,9 %iger Kochsalzlösung ohne Gelanteil löslich ist.

Beispiel 7

Analog zu Beispiel 4 werden 3,50 kg Polyethylenoxid (Molekulargewicht 5 000 000) pro Stunde bei einer Massetemperatur von 200°C durch einen gleichsinnig rotierenden Doppelwellenextruder gefördert.

Nach dem Austrag aus dem Extruder erhält man ein Polyethylenoxid mit einem Molekulargewicht von 121 000 und monomodaler Molekulargewichtsverteilung (Uneinheitlichkeit = 5,37), das in 0,9 %iger Kochsalzlösung ohne Gelanteil löslich ist.

Beispiel 8

Polyethylenoxid mit einem Molekulargewicht von 5 000 000 wird mit einem Durchsatz von 1,60 kg/h bei einer Massetemperatur von 150°C durch einen gleichsinnig rotierenden Doppelwellenextruder wie in Beispiel 1 beschrieben mit einer Rotationsgeschwindigkeit der Wellen von 130 U/Min gefördert. Zum Abbau des Polyethylenoxids wird in der Förderzone 3 komprimierte Luft mit einer Menge von 160 l/h (bei Normaldruck) eindosiert. Die Förderzone 3 und die Reaktionszone 4 besitzen Knetelemente mit links und rechts versetzten Knetscheiben.

In der Ausdampf- bzw. Entgasungszone 5 werden der nicht abreagierte Sauerstoff, der Stickstoff sowie flüchtige Bestandteile bei einem Druckvon 280 mbar entfernt.

Nach dem Austrag aus dem Extruder erhält man ein Polyethylenoxid mit einem Molekulargewicht von 31 200 und monomodaler Molekulargewichtsverteilung (Uneinheitlichkeit = 1,90), das in 0,9 %iger Kochsalzlösung ohne Gelanteil löslich ist.

Beispiel 9

Polyethylenoxid mit einem Molekulargewicht von 5 000 000 wird mit einem Durchsatz von 1,49 kg/h bei einer Massetemperatur von 170°C durch einen gleichsinnig rotierenden Doppelwellenextruder wie in Beispiel 1 beschrieben mit einer Rotationsgeschwindigkeit der Wellen von 130 U/Min gefördert. Zum Abbau des Polyethylenoxids wird in der Förderzone 3 komprimierte Luft mit einer Menge von 900 l/h (bei Normaldruck) eindosiert. In der Förderzone 3 und der Reaktionszone 4 werden Linksgewinde eingesetzt.

In der Ausdampf- bzw. Entgasungszone 5 werden der nicht abreagierte Sauerstoff, der Stickstoff sowie flüchtige Bestandteile bei einem Druck von 280 mbarentfernt.

Nach dem Austrag aus dem Extruder erhält man ein Polyethylenoxid mit einem Molekulargewicht von 43 100 und monomodaler Molekulargewichtsverteilung (Uneinheitlichkeit = 6,28), das in 0,9 %iger Kochsalzlösung ohne Gelanteil löslich ist.

Beispiel 10

Polyethylenoxid mit einem Molekulargewicht von 5 000 000 wird mit einem Durchsatz von 1,54 kg/h bei einer Massetemperatur von 150°C durch einen gleichsinnig rotierenden Doppelwellenextruder wie in Beispiel 1 beschrieben mit einer Rotationsgeschwindigkeit der Wellen von 130 U/Min gefördert. Zum Abbau des Polyethylenoxids werden in der Reaktionszone 4 Knetelemente mit links und rechts versetzten Knetscheiben sowie am Ende der Reaktionszone 4 ein Linksgewinde eingesetzt.

In der Ausdampfzone 5 werden flüchtige Bestandteile bei einem Druck von 500 mbar entfernt.

Nach dem Austrag aus dem Extruder erhält man ein Polyethylenoxid mit einem Molekulargewicht von 809 200 und bimodaler Molekulargewichtsverteilung (Uneinheitlichkeit = 17,10), das in 0,9 %iger Kochsalzlösung ohne Gelanteil löslich ist.

Beispiel 11

Polyethylenoxid mit einem Molekulargewicht von 5 000 000 wird mit einem Durchsatz von 1,54 kg/h bei einer Massetemperatur von 150°C durch einen gleichsinnig rotierenden Doppelwellenextruder wie in Beispiel 1 beschrieben mit einer Rotationsgeschwindigkeit der Wellen von 130 U/Min gefördert. Zum Abbau des Polyethylenoxids werden in der Reaktionszone 4 Knetelemente mit links und rechts versetzten Knetscheiben eingesetzt.

In der Ausdampfzone 5 werden flüchtige Bestandteile bei einem Druck von 250 mbar entfernt.

Nach dem Austrag aus dem Extruder erhält man ein Polyethylenoxid mit einem Molekulargewicht von 292 900 und trimodaler Molekulargewichtsverteilung (Uneinheitlichkeit = 27,0), das in 0,9 %iger Kochsalzlösung ohne Gelanteil löslich ist.

### Beispiel 12

Polyethylenoxid mit einem Molekulargewicht von 5 000 000 wird mit einem Durchsatz von 2,10 kg/h bei einer Massetemperatur von 200°C durch einen gleichsinnig rotierenden Doppelwellenextruder wie in Beispiel 1 beschrieben mit einer Rotationsgeschwindigkeit der Wellen von 130 U/Min gefördert. Zum Abbau des Polyethylenoxids wird in der Förderzone 3 komprimierte Luft mit einer Menge von 160 l/h (bei Normaldruck) eindosiert. In der Förderzone 3 und der Reaktionszone 4 werden Knetelemente mit links und rechts versetzten Knetscheiben sowie Linksgewinde eingesetzt.

In der Ausdampf- bzw. Entgasungszone 5 werden der nicht abreagierte Sauerstoff, der Stickstoff sowie flüchtige Bestandteile bei einem Druck von 280 mbar entfernt.

Nach dem Austrag aus dem Extruder erhält man ein Polyethylenoxid mit einem Molekulargewicht von 97 600 und trimodaler Molekulargewichtsverteilung (Uneinheitlichkeit = 13,1), das in 0,9 %iger Kochsalzlösung ohne Gelanteil löslich ist.

### Patentansprüche

1. Verfahren zur Herstellung von gelfreien Polyethylenoxiden mit einem Molekulargewicht von 10 000 bis 1 500 000, dadurch gekennzeichnet, daß man Polyethylenoxide mit einem Molekulargewicht von 2 500 000 bis 10 000 000 bei einer Massetemperatur von 80 bis 250°C durch Scherung in Masse in geeigneten Aggregaten, die Schergefälle von 250 bis 4000 $sec^{-1}$ erzeugen, abbaut.

2. Verfahren gemäß Anspruch 1 zur Herstellung von Polyethylenoxiden mit einem Molekulargewicht von 20 000 bis 800 000.

3. Verfahren gemäß Anspruch 1 zur Herstellung von Polyethylenoxiden mit einem Molekulargewicht von 30 000 bis 650 000.

4. Verfahren gemäß Anspruch 1, dadurch gekennzeichnet, daß man Polyethylenoxide mit Molekulargewichten von 3 500 000 bis 8 000 000 bei einer Massetemperatur von 130°C bis 230°C in Abwesenheit von Lösungsmitteln durch Scherung abbaut.

5. Verfahren gemäß Anspruch 1, dadurch gekennzeichnet, daß man Aggregate verwendet, die Schergefalle von 400 bis 1500 $sec^{-1}$ erzeugen.

6. Verfahren gemäß Ansprüchen 1 bis 5, dadurch gekennzeichnet, daß man Extruder mit links und rechts versetzten Knetscheiben verwendet.

7. Verfahren gemäß Anspruch 1, dadurch gekennzeichnet, daß man in die Scheraggregate Sauerstoff oder sauerstoffhaltige Gasgemische einleitet.

8. Verfahren gemäß Anspruch 1, dadurch gekennzeichnet, daß man in die Scheraggregate Gasgemische einleitet, die bis zu 20 Vol.-% Sauerstoff enthalten, in einer Dosierung von bis zu 600 l Gasgemisch pro kg Polymer.

9. Verwendung von gelfreiem Polyethylenoxid mit mittlerem Molekulargewicht, hergestellt gemäß Anspruch 1 in pharmazeutischen Zubereitungen.

FIG.1

## FIG. 2

% freigesetzt

Zeit (h)

—✳— Polyox
Bestrahlung

—◊— Polyox.
Scherung

## FIG.3

mg freigesetzt

Zeit (h)

—✳— Polyox.
Bestrahlung

—◊— Polyox
Scherung